# EUROPEAN PATENT SPECIFICATION

(11) **EP 3 714 140 B1**
(45) Date of publication and mention of the grant of the patent: **27.10.2021**
(21) Application number: 18816236.6
(22) Date of filing: 16.11.2018
(51) Int. Cl.: F01P 7/08, F01P 5/04, F16D 27/01

(54) **DEVICE FOR DRIVING AT THREE SPEEDS FANS FOR COOLING THE COOLANT IN MOTOR VEHICLES**
VORRICHTUNG ZUM ANTRIEB VON DREI VENTILATOREN ZUR KÜHLUNG DES KÜHLMITTELS IN KRAFTFAHRZEUGEN
DISPOSITIF D'ENTRAÎNEMENT À TROIS VITESSES DE VENTILATEURS POUR LE REFROIDISSEMENT DU LIQUIDE DE REFROIDISSEMENT DANS DES VÉHICULES AUTOMOBILES

(30) Priority: 20.11.2017 IT 201700132363
(43) Date of publication of application: 30.09.2020
(73) Proprietor: Baruffaldi S.p.A., 20067 Tribiano (IT)
(72) Inventor: BOFFELLI, Piercarlo, deceased (IT)
(74) Representative: Stucovitz, Alessandro
(86) International application number: PCT/IB2018/059034
(87) International publication number: WO 2019/097465

(56) References cited:
- EP-A1- 2 599 976
- EP-A2- 1 577 142
- EP-A2- 1 988 263

## Description

The present invention relates to a device for driving at three speeds fans for cooling the coolant in motor vehicles.

It is known, in the technical sector relating to the cooling of the coolants contained in the radiators of motor vehicles, that there exists the need to force air onto the said radiator, in order to obtain as rapid as possible dissipation of heat from the liquid externally, said forced air flow being obtained by causing the rotation of a fan, normally mounted either directly on the engine shaft, or on the shaft of the water pump, or on a fixed driven shaft carrying a pulley which receives movement from a belt driven by the engine shaft.

It is also known that said fan must be rotated only upon reaching of a certain predefined water temperature detected by means of a thermostat which operates an electromagnetic clutch, closing of which causes the rotation of the fan.

In greater detail it is required that a motor vehicle fan should be able to rotate:
- at a speed slower than that of the transmission shaft for cooling in low external temperature conditions;
- at a speed the same as or even greater than that of the transmission shaft at higher external temperatures or during use in demanding conditions which result in overheating of the engine;
- at zero speed, namely with the fan which does not rotate at all and remains in the idle condition with respect to the transmission shaft, in the case of particularly low temperatures at which further cooling is not useful or is even damaging.

In an attempt to obtain such behaviour, couplings of the mixed type with electromagnetically controlled clutches and driving joints based on the use of eddy currents generated by the rotation of a conductive element in the vicinity of permanent magnets have been provided.

EP 1 130 232 A1, in the name of the present Applicant, describes a device for transmission of the movement to a fan for cooling the cooling the coolant in a motor vehicle, comprising movement generation means on which the fan is mounted by means of an idle support, a first electromagnetic clutch, engagement/disengagement of which causes rotation of the fan at a speed the same as that of the movement generation means or at zero speed; a second clutch, engagement/disengagement of which causes the rotation of the fan at a speed slower than or at zero speed in relation to that of the movement generation means; means of the electromagnetic type for engagement/disengagement of the said second clutch, wherein said first clutch is supported in a position substantially adjacent to the fixed base of the engine housing and said second clutch is supported by a shaft fixed in a position substantially projecting from the base of the engine.

Although fulfilling its function, this device nevertheless has drawbacks resulting from the fact that the small air-gap present between the rotor of the second clutch and the fixed electromagnet may result in excessive wear in the event of accidental contact due either to the vibrations transmitted by the movement generating part integral with the internal combustion engine or to the tolerances as regards the concentricity of the coaxial elements during their relative movement.

In addition, a large number of components are mounted on an axial extension of the rotor of a first electromagnetic coupling, generating high torques due to the projecting load acting on said rotor.

EP 1 577 142 A describes a device for driving a fan at several speeds, which comprises an electromagnetic coupling comprising a first electromagnet, an electromagnetic actuating brake and a Foucault coupling which are arranged between means for taking up a rotational movement and a fan support. In this device, the brake is integral with the fan support and is operated so as to stop completely rotation of the fan. This structure is disadvantageous both from the constructional point of view and due to the fact that, when the brake is engaged, there is in any case a consumption of power due to the resistive torque of the Foucault coupling, with consequent use of energy.

The technical problem which is posed, therefore, is that of providing a device for transmitting the rotational movement to a fan for cooling the coolant in motor vehicles, which allows the fan to be operated at a speed which may be determined depending on the actual cooling requirement of the engine, this including also the possibility of keeping the fan in an idle position, said fan having compact dimensions without large and costly projecting rotating masses, being formed by a small number of high-cost parts and being able also to ensure safety rotation of the fan also in the event of failure of the power supply and control devices.

In connection with this problem it is also required that this device should have small dimensions, be easy and inexpensive to produce and assemble and be able to be easily installed at any user location using normal standardized connection means.

These results are obtained according to the present invention by a device for driving at three speeds fans for cooling the coolant in motor vehicles, comprising: a fixed axial sleeve, designed to be fastened to a base of the vehicle engine; a fan support for carrying the fan during use; a first electromagnetic coupling comprising a first fixed electromagnet; a second electromagnetic coupling, comprising a fixed electromagnet mounted on the axial sleeve; and an eddy current or Foucault coupling. The first coupling, the second coupling and the Foucault coupling are arranged between means for taking up the movement and the fan support, and the first coupling comprises a first rotor and the second coupling comprises a second rotor, the first rotor and second rotor being mounted on a respective bearing keyed onto the fixed axial sleeve.

According to the invention, the second electromagnetic coupling comprises an armature arranged axially on the opposite side to the second electromagnet relative to the second rotor and rotationally integral with the rotor of the first coupling, and a driving part of the Foucault coupling is mounted on the second rotor, while the driven part of the Foucault coupling is integral with the fan support, so that excitation of only the electromagnet of the second coupling causes the rotational operation of the fan support at a speed slower than that of the first rotor, by means of the Foucault coupling. Further details may be obtained from the following description of non-limiting examples of embodiment of the subject of the present invention, provided with reference to the accompanying drawings, in which:
Figure 1: shows a schematic axial section through the device for transmitting the movement to the fan according to the present invention; and
Figure 2: shows a cross-section, similar to that of Fig. 1, of a variation of embodiment of the device according to the invention.

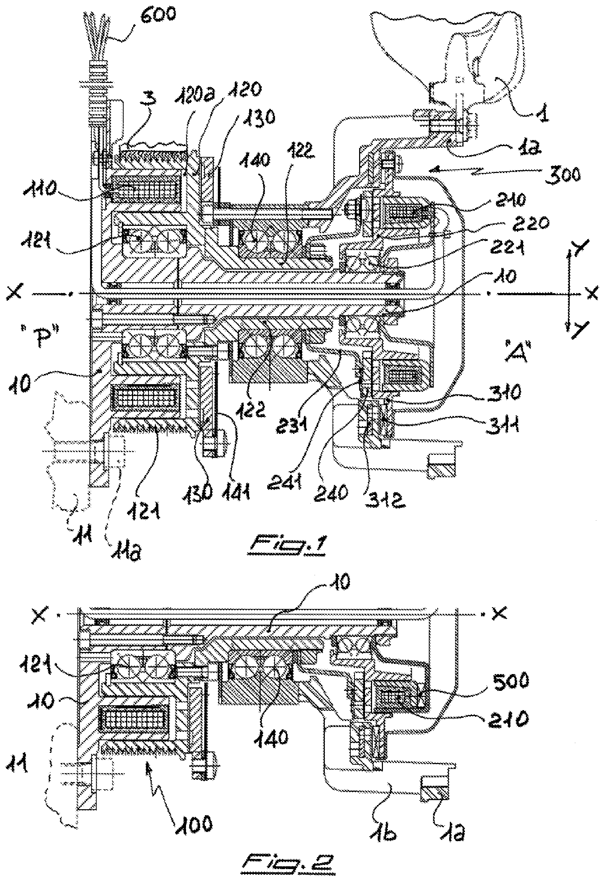

As shown in Fig. 1 and assuming solely for the sake of easier description and without any limiting meaning a pair of reference axes extending respectively in a longitudinal direction X-X, coinciding with the axis of rotation of the device, and transverse/radial direction Y-Y, perpendicular to the first direction, as well as a front part "A" corresponding to the axial position of the fan and a rear part "P", opposite to the front part, the device for actuating and controlling a fan 1 for motor vehicles according to the invention comprises essentially:
- a fixed axial sleeve 10 fastened to the base 11 of the engine by means of screws 11a;
- a fan support 1a;
- a first electromagnetic coupling 100;
- a second electromagnetic coupling 200;
- an eddy current or Foucault coupling 300.

In greater detail and in a preferred example of embodiment:
the first electromagnetic coupling 100 comprises a first electromagnet 110 fixed to the sleeve 10 and a first coaxial rotor 120 mounted idle on a bearing 121 keyed onto the sleeve 10. Preferably, the rotor 120 has an axially extending seat 120a for housing the electromagnet 110 and an axially extending pulley 121 formed on the radially outer edge of the rotor and suitable for engagement with a belt 3 connected to the driving shaft so as to form a preferred example of means for taking up the rotational movement;
a first armature 130 is axially arranged on the opposite side to the first electromagnet 110 relative to the first rotor 120, the first armature is connected to a first end of the outer race of a bearing 140, the inner race of which is keyed onto an axial extension 122 of the rotor 120; at the opposite end to that of the armature 120 the bearing is connected to the support 1a of the fan 1;
an elastic membrane 141 may be arranged between the first armature 130 and the bearing 140 and is designed to allow the displacement of the armature in an axial direction, but not its rotation about the longitudinal axis. The second electromagnetic coupling 200 is arranged downstream of the first coupling 100 towards the front part A of the device; the second coupling comprises:
   - a second electromagnet 210 fixed to the sleeve 10 and preferably acting along an axial direction opposite to that of the first electromagnet 110;
   - a second rotor 220 mounted idle on the fixed sleeve 10 via a bearing 221;
   - a second armature 240 axially arranged on the opposite side to the second electromagnet 210 relative to the second rotor 220 and rotationally integral with the first rotor 120; the second armature is for example connected to a first end of a flange 231, the other end of which is fastened to the axial extension 122 of the rotor 120.

An elastic membrane 241 may be arranged between the second armature 240 and the flange 231 and is designed to allow the displacement of the armature in an axial direction, but not its rotation about the longitudinal axis. According to the invention, a driving part of the Foucault coupling 300 is mounted on the second rotor 220 and a driven part of the Foucault coupling is instead integral with the support 1a of the fan 1. According to the preferred example illustrated, this is achieved as follows: in its radially outermost part the rotor 220 has an annular extension 310 which carries permanent magnets 311 which form the first driving part of the Foucault coupling 300, the driven part of which is formed by a conductive ring 312 incorporated in the support 1a of the fan 1 in a radial position such as to be situated axially opposite the said permanent magnets.

In this way, the ring 312 and the magnets 311 form the induction concatenation elements with the annular extension of the second rotor 220, for rotationally driving the support 1a and therefore the fan 1.

With this configuration the operating principle of the device is as follows:
- if both the first electromagnet 110 and the second electromagnet 210 are not excited, the support 1a of the fan 1 is in the idle condition. Both the first armature 130 of the first coupling 100 and the second armature 240 of the second coupling 200 remain in fact detached from the respective first rotor 120 and second rotor 220, and the fan 1 is consequently detached from any movement take-up device and remains in the idle condition. In this idle condition, the fan is not locked and may rotate if necessary owing to the friction of the bearing supporting the fan support, but there is no power consumption, except a minimum amount resulting from the friction within the support bearing itself;
- if only the electromagnet 110 of the first coupling 100 is excited, the first armature 130 is recalled so as to make contact with the first rotor 120 with which it starts to rotate, causing the rotation of the support 1a and therefore the fan 1 at a speed the same as that of the first rotor 120 driven by the movement take-up belt 3;
- if only the electromagnet 210 of the second coupling 200 is excited, the second armature 240 is recalled against the second rotor 220 which is made to rotate at a speed the same as that of the first rotor 120 with which the second armature 240 is integral, thus activating the Foucault coupling 300 which, as a result of concatenation of the flows between the second rotor 220 and the support 1a, causes rotation of the latter and therefore the fan 1 at a speed slower than that of the first rotor 120 driven by the belt 3.

Although not described in detail, the figures show the electric cables 600 for energizing the two electromagnets, said cables being connected to a control unit for controlling the temperatures and operating the fan when predetermined threshold values are exceeded.

It is therefore clear how the device according to the invention gives rise to numerous advantages compared to the prior art since, even while allowing operation in three speed modes, i.e. direct, slow and idle, the following is achieved:
- a reduction in the number of bearings needed for operation since the second electromagnet, which must be fixed, is mounted directly on the fixed axial sleeve 10;
- better positioning of the fan in the idle condition since the rotor of the second coupling is mounted on a bearing keyed onto the fixed sleeve and therefore tends to brake rotation of the fan instead of favouring its rotation;
- the support 1a of the fan may be provided in a low-cost manner with finning 1b which forms a radiator for dissipating the heat generated by the Foucault coupling;

- the magnet and the rotor are mounted concentrically on the same axis, therefore avoiding eccentricities which require very precise machining on a machine tool;
- both the rotors 120,220 and the associated bearing rest on the fixed sleeve, thus avoiding cantilever weights acting on the bearing of the first rotor pulley;
- minimum power consumption when the fan is in the idle condition, since in this condition there is no resistive torque on the part of the Foucault coupling.

According to a preferred embodiment, shown in Fig. 3, permanent magnets 500 are also arranged in a front axial position in contact with the second electromagnet 210 so that, in the event of a total failure or interruption of the electric power supply for the electromagnets 110,210, the magnet 500 of the second clutch attracts the armature 240, thus driving the second rotor 220 which, via the Foucault coupling 300, maintains an albeit limited rotation of the fan (so-called "Fail Safe mode") which ensures cooling so that, for example, the vehicle may have enough autonomy to be driven to a service centre.

Although described in connection with a number of embodiments and a number of preferred examples of implementation of the invention, it is understood that the scope of protection of the present patent is determined solely by the claims below.

## Claims

1. Device for driving at three speeds a fan (1) for cooling the coolant in a motor vehicle, comprising:
- a fixed axial sleeve (10) designed to be fastened to a base (11) of the vehicle engine;
- a fan support (1a) for carrying the fan (1) during use;
- a first electromagnetic coupling (100) comprising a first fixed electromagnet (110);
- a second electromagnetic coupling (200);
- a Foucault or eddy current coupling (300),
the first coupling, the second coupling and the Foucault coupling being arranged between means (121) for taking up a rotational movement and the said fan support (1a) for the fan (1); wherein
the first coupling (100) comprises a first rotor (120) and the second coupling (200) comprises a second rotor (220), the first rotor (120) and the second rotor (220) being mounted on a respective bearing (121,221) keyed onto the fixed axial sleeve (10);
said second electromagnetic coupling (200) comprises a fixed electromagnet (210) mounted on the axial sleeve (10) and an armature (240) axially arranged on the opposite side to the second electromagnet (210) relative to the second rotor (220) and rotationally integral with the rotor (120) of the first coupling,
and wherein a driving part of the Foucault coupling (300) is mounted on the second rotor (220) and a driven part of the Foucault coupling is integral with the support (1a) of the fan (1),
so that the excitation of only the electromagnet (210) of the second coupling (200) causes rotational driving of the support (1a) of the fan at a speed slower than that of the first rotor (120), by means of the Foucault coupling (300).

2. Device according to Claim 1, **characterized in that** said first rotor (120) has an axially extending seat (120a) for housing the first electromagnet (110).

3. Device according to Claim 1, **characterized in that** the means for taking up movement comprise an axially extending pulley (121), formed on the radially outer edge of the first rotor and suitable for engagement with movement generating means (3) connected to the driving shaft, so as take up the rotational movement.

4. Device according to any one of the preceding claims, **characterized in that** it comprises a bearing (140), the inner race of which is keyed onto an axial extension (122) of the firs rotor (120) and the outer race of which has a first rear end connected to a first armature (130) axially arranged on the opposite side to the first electromagnet (110) relative to the first rotor (120).

5. Device according to Claim 4, **characterized in that** the front end of the bearing (140) opposite to that connected to the first armature (120) is connected to the support (1a) of the fan.

6. Device according to any preceding Claim, **characterized in that** said second rotor (220) has an annular extension (310) in its radially outermost part for carrying permanent magnets (311) which form the driving part of the Foucault coupling (300).

7. Device according to any preceding Claim, **characterized in that** the driven part of the Foucault coupling is formed by a conductive ring (312) incorporated in the support (1a) of the fan (1) in a radial position such as to be situated axially opposite the said permanent magnets.

8. Device according to any preceding Claim, **characterized in that** it comprises permanent magnets (500) arranged in a front axial position and in contact with the second electromagnet (210), for providing a Fail Safe operation.

9. Device according to any preceding claim, wherein when both the first electromagnet (110) and second electromagnet (210) are not excited, the support of the fan (1) is in the idle condition.

## Patentansprüche

1. Vorrichtung zum Antrieb eines Ventilators (1) zum Kühlen des Kühlmittels in einem Kraftfahrzeug mit drei Geschwindigkeiten, umfassend:
- eine feststehende Axialhülse (10), die an einer Basis (11) des Fahrzeugmotors befestigt werden kann;
- einen Ventilatorträger (1a) zum Tragen des Ventilators (1) während des Gebrauchs;
- eine erste elektromagnetische Kupplung (100) mit einem ersten feststehenden Elektromagneten (110);
- eine zweite elektromagnetische Kupplung (200);
- eine Foucault- oder Wirbelstromkupplung (300),
wobei die erste Kupplung, die zweite Kupplung und die Foucault-Kupplung zwischen Mitteln (121) zur Aufnahme einer Drehbewegung und dem Ventilatorträger (1a) für den Ventilator (1) angeordnet sind; wobei die erste Kupplung (100) einen ersten Rotor (120) umfasst und die zweite Kupplung (200) einen zweiten Rotor (220) umfasst, wobei der erste Rotor (120) und der zweite Rotor (220) auf einem jeweiligen Lager (121, 122) gelagert sind, das auf die feststehende Axialhülse (10) aufgekeilt ist;
die zweite elektromagnetische Kupplung (200) einen feststehenden Elektromagneten (210), der an der Axialhülse (10) angebracht ist, und einen Anker (240) umfasst, der auf der dem zweiten Elektromagneten (210) gegenüberliegenden Seite axial zu dem zweiten Rotor (220) und drehintegral mit dem Rotor (120) der ersten Kupplung angeordnet ist,
und wobei ein Antriebsteil der Foucault-Kupplung (300) an dem zweiten Rotor (220) angebracht ist und ein Abtriebsteil der Foucault-Kupplung mit dem Träger (1a) des Ventilators (1) einstückig ausgebildet ist,
sodass die Erregung nur des Elektromagneten (210) der zweiten Kupplung (200) bewirkt, dass der Träger (1a) des Ventilators mit Hilfe der Foucault-Kupplung (300) mit einer langsameren Geschwindigkeit in Drehung versetzt wird als der erste Rotor (120).

2. Vorrichtung nach Anspruch 1, **dadurch gekennzeichnet, dass** der erste Rotor (120) einen axial verlaufenden Sitz (120a) zur Aufnahme des ersten Elektromagneten (110) besitzt.

3. Vorrichtung nach Anspruch 1, **dadurch gekennzeichnet, dass** die Mittel zur Aufnahme einer Bewegung eine axial verlaufende Riemenscheibe (121) umfassen, die an dem radial äußeren Rand des ersten Rotors ausgebildet ist und dazu geeignet ist, in Bewegungserzeugungsmittel (3) einzugreifen, die mit der Antriebswelle verbunden sind, um die Drehbewegung aufzunehmen.

4. Vorrichtung nach einem der vorhergehenden Ansprüche, **dadurch gekennzeichnet, dass** sie ein Lager (140) umfasst, dessen innerer Laufring auf einen axialen Fortsatz (122) des ersten Rotors (120) aufgekeilt ist und dessen äußerer Laufring mit einem ersten hinteren Ende mit einem ersten Anker (130) verbunden ist, der axial zu dem ersten Rotor (120) auf der dem ersten Elektromagneten (110) gegenüberliegenden Seite angeordnet ist.

5. Vorrichtung nach Anspruch 4, **dadurch gekennzeichnet, dass** das vordere Ende des Lagers (140) entgegengesetzt zu dem mit dem ersten Anker (120) verbundenen Ende mit dem Träger (1a) des Ventilators verbunden ist.

6. Vorrichtung nach einem der vorhergehenden Ansprüche, **dadurch gekennzeichnet, dass** der zweite Rotor (220) in seinem radial äußersten Teil einen ringförmigen Fortsatz (310) zum Tragen von Permanentmagneten (311) besitzt, die den Antriebsteil der Foucault-Kupplung (300) bilden.

7. Vorrichtung nach einem der vorhergehenden Ansprüche, **dadurch gekennzeichnet, dass** der Abtriebsteil der Foucault-Kupplung durch einen leitfähigen Ring (312) gebildet wird, der an einer radialen Position so in den Träger (1a) des Ventilators (1) eingebaut ist, dass er den Permanentmagneten axial gegenüberliegt.

8. Vorrichtung nach einem der vorhergehenden Ansprüche, **dadurch gekennzeichnet, dass** sie Permanentmagnete (500) umfasst, die an einer vorderen axialen Position und in Kontakt mit dem zweiten Elektromagneten (210) angeordnet sind, um einen störungsfreien Betrieb zu ermöglichen.

9. Vorrichtung nach einem der vorhergehenden Ansprüche, wobei sich der Träger des Ventilators (1) im Leerlaufzustand befindet, wenn weder der erste Elektromagnet (110) noch der zweite Elektromagnet (210) erregt sind.

## Revendications

1. Dispositif d'entraînement à trois vitesses d'un ventilateur (1) pour refroidir le liquide de refroidissement d'un véhicule à moteur, comprenant :
- un manchon axial fixe (10) conçu pour être fixé à une base (11) du moteur de véhicule ;
- un support de ventilateur (1a) destiné à supporter le ventilateur (1) pendant l'utilisation ;
- un premier accouplement électromagnétique (100) comprenant un premier électroaimant fixe (110) ;
- un second accouplement électromagnétique (200) ;
- un accouplement à courant de Foucault (300),
le premier accouplement, le second accouplement et l'accouplement à courant de Foucault étant disposés entre des moyens (121) destinés à recevoir un mouvement de rotation et ledit support de ventilateur (1a) destiné au ventilateur (1) ; dans lequel
le premier accouplement (100) comprend un premier rotor (120) et le second accouplement (200) comprend un second rotor (220), le premier rotor (120) et le second rotor (220) étant montés sur un palier respectif (121, 221) calé sur le manchon axial fixe (10) ;
ledit second accouplement électromagnétique (200) comprend un électroaimant fixe (210) monté sur le manchon axial (10) et une armature (240) disposée axialement du côté opposé au second électroaimant (210) par rapport au second rotor (220) et solidaire en rotation avec le rotor (120) du premier accouplement,
et dans lequel une partie menante de l'accouplement à courant de Foucault (300) est montée sur le second rotor (220) et une partie menée de l'accouplement à courant de Foucault est d'un seul tenant avec le support (1a) du ventilateur (1),
de sorte que l'excitation uniquement de l'électroaimant (210) du second accouplement (200) provoque un entraînement en rotation du support (1a) du ventilateur à une vitesse inférieure à celle du premier rotor (120), au moyen de l'accouplement à courant de Foucault (300).

2. Dispositif selon la revendication 1, **caractérisé en ce que** ledit premier rotor (120) comporte un logement s'étendant axialement (120a) destiné à loger le premier électroaimant (110).

3. Dispositif selon la revendication 1, **caractérisé en ce que** les moyens destinés à recevoir un mouvement comprennent une poulie s'étendant axialement (121), formée sur le bord radialement extérieur du premier rotor et appropriée pour coopérer avec un moyen de génération de mouvement (3) en prise avec l'arbre d'entraînement, de façon à recevoir le mouvement de rotation.

4. Dispositif selon l'une quelconque des revendications précédentes, **caractérisé en ce qu'**il comprend un palier (140), dont la bague intérieure est calée sur un prolongement axial (122) du premier rotor (120) et dont la bague extérieure comporte une première extrémité arrière reliée à une première armature (130) disposée axialement du côté opposé au premier électroaimant (110) par rapport au premier rotor (120).

5. Dispositif selon la revendication 4, **caractérisé en ce que** l'extrémité avant du palier (140) opposée à l'extrémité reliée à la première armature (120) est reliée au support (1a) du ventilateur.

6. Dispositif selon l'une quelconque des revendications précédentes, **caractérisé en ce que** ledit second rotor (220) comporte un prolongement annulaire (310) dans sa partie radialement le plus à l'extérieur destiné à porter des aimants permanents (311) qui forment la partie d'entraînement de l'accouplement à courant de Foucault (300) .

7. Dispositif selon l'une quelconque des revendications précédentes, **caractérisé en ce que** la partie menée de l'accouplement à courant de Foucault est formée par une bague conductrice (312) incorporée dans le support (1a) du ventilateur (1) dans une position radiale de façon à se trouver axialement opposée auxdits aimants permanents.

8. Dispositif selon l'une quelconque des revendications précédentes, **caractérisé en ce qu'**il comprend des aimants permanents (500) disposés à une position axiale avant et en contact avec le second électroaimant (210), pour fournir un fonctionnement à sécurité intégrée.

9. Dispositif selon l'une quelconque des revendications précédentes, dans lequel, lorsque ni le premier électroaimant (110) ni le second électroaimant (210) n'est excité, le support du ventilateur (1) est dans l'état libre.
